# EUROPEAN PATENT APPLICATION

(11) **EP 4 279 142 A1**
(43) Date of publication of application: **22.11.2023**
(21) Application number: 21919893.4
(22) Date of filing: 09.12.2021
(51) Int. Cl.: A62B 1/06, A62B 1/18, A62B 1/16, G08B 5/00, C09D 5/18, B66D 1/60, B66D 1/48, B66D 1/36, H02K 7/116, H02K 7/00

(54) **PORTABLE EMERGENCY ESCAPE APPARATUS**

(30) Priority: 15.01.2021 KR 20210006359; 15.01.2021 KR 20210006360
(71) Applicant: Reel Tech Co., Ltd., Jeollanam-do 58009 (KR); Shin, Jeong Hoon, Suncheon-si, Jeollanam-do 57930 (KR)
(72) Inventor: SHIN, Jeong Hoon, Suncheon-si, Jeollanam-do 57930 (KR)
(74) Representative: Habermann, Hruschka & Schnabel
(86) International application number: PCT/KR2021/018590
(87) International publication number: WO 2022/154269

(57) **Abstract**

The present invention discloses a portable emergency escape device comprising a casing, a drum rotatably installed inside the casing and around which a wire is wound, a reduction gear connected to the drum, a DC motor having a rotation shaft connected to the reduction gear, a safety belt worn by a user, a braking resistor for determining a descent speed, and a constant speed control unit connected to the braking resistor. The braking resistor is connected between both ends of a power input terminal of the DC motor, and the braking resistor can control a resistance value. And, the constant speed control unit changes the resistance value of the braking resistor in response to the user's weight to maintain the descent speed constant regardless of the user's weight.

## Description

### TECHNICAL FIELD

The present application claims priority based on Korean Patent Application No. 10-2021-0006359 and Korean Patent Application No. 10-2021-0006360 filed on January 15, 2021, and all contents disclosed in the specifications and drawings at filing of the patent applications are incorporated herein.

The present invention relates to a portable emergency escape device, and more particularly, to a portable emergency escape device that helps a user safely escape to the ground by descending using a wire through a window of a building in the event of an emergency such as a fire in a high-rise building.

### BACKGROUND ART

In general, when an emergency such as a fire occurred in a building such as an apartment or a high-rise building, an emergency escape operation is performed to evacuate using an elevated firefighting ladder or to jump onto an air mat after installing the air mat on the ground.

However, escape using the ladder has a place limitation requiring a large space for an installation, and in the case of a high-rise building where the ladder does not reach, it becomes useless.

In addition, air mats are subject to restrictions requiring a large number of people and a large space for an installation, and in the case of high-rise buildings, escape time is delayed due to the uneasy psychology of escapers, and it is difficult to accurately jump down the air mat due to wind etc..

Accordingly, an emergency escape device was proposed. The emergency escape device consists of a drum rotatably installed inside a casing and around which a wire is wound, a reduction gear connected to the drum for decelerating a rotational speed of the drum in case of an emergency escape, a hook connected to an end of the wire and fixed on a pillar of a high-rise building, and a safety belt connected to a lower end of the casing to bind the user's body.

As described above, the emergency escape device using a wire has the advantage of being able to quickly descend through a window and make an emergency escape in the event of a fire. However, since the descending speed is reduced using only a reduction gear, the descending speed is not constant, causing problems such as not only the user's uneasy feeling, but also not being able to stably used in an emergency escape.

Alternatively, KR 2018-0119180A discloses an emergency escape device for high-rise buildings that can descend at constant speed according to a weight of an escaper using a flow control valve of a speed controller and can increase or decrease the descending speed if necessary.

The emergency escape device disclosed in the KR 2018-0119180A controls a rotational speed of a wire drum by flow control, and for this purpose, a flow control valve for the flow control is installed between the first and second piston cylinders. When a flowing volume in the first and second piston cylinders increases, the rotational speed of the wire drum increases because a volume change of the first and second piston cylinders increases, so that the speed at which the escaper descends increases.

However, a method of controlling the descending speed using fluid as described above has disadvantages in that volume and weight of the device are large and complicated, making it inconvenient to use, in that malfunction or inoperable state may occur when the fluid leaks due to a fluid transport line or the piston cylinder being exposed to high temperature.

### DISCLOSURE

### Technical Goal

The present invention has been invented to solve the above problems. That is to say, an object of the present invention is to provide a portable emergency escape device that performs a braking by using a braking resistance of a DC motor when descending and the descending speed is automatically controlled in response to a weight of a user at a constant speed regardless of the weight of the user.

Another object of the present invention is to provide a portable emergency escape device having a function to stably start a descent in a state in which a user corrects his or her posture immediately before descending.

Another object of the present invention is to provide a portable emergency escape device having a structure with which the user can freely control the descent speed as needed during descent.

Another object of the present invention is to provide a portable emergency escape device having a structure that prevents a user's body from rotating by a wire during the descent.

Another object of the present invention is to provide a portable emergency escape device having an improved structure to support a big load.

### Technical Solution

In order to achieve the above object, the present invention comprises a casing, a drum rotatably installed inside the casing and around which a wire is wound, a reduction gear connected to the drum, a DC motor having a rotation shaft connected to the reduction gear, a safety belt worn by a user, a braking resistor for determining a descent speed, and a constant speed control unit connected to the braking resistor.

The braking resistor is connected between both ends of a power input terminal of the DC motor, and the braking resistor can control a resistance value. The constant speed control unit changes the resistance value of the braking resistor in response to (according to) the user's weight to maintain the descent speed constant regardless of the user's weight.

The constant speed control unit may change the resistance value of the braking resistor by physically moving or transforming at least some parts in response to the weight of the user.

Alternatively, the constant speed control unit changes the resistance value of the braking resistor by differently detecting a mechanical deformation of an axis of the drum or a guide roll being in contact with the wire in response to the weight of the user through a spring disposed on one side of an inside of the casing.

Alternatively, when descending, the constant speed control unit differently checks at least one of a voltage and a current generated between the power input terminals of the DC motor in response to the weight of the user to change the resistance value of the braking resistor.

Alternatively, when descending, the constant speed control unit differently checks a rotation amount of one selected from the DC motor, the drum, the reduction gear, and a guide roll in response to the weight of the user to change the resistance value of the braking resistor.

Alternatively, the constant speed control unit comprises a DIP (Dual In-line Package) switch for selecting a range that allows the user to select a range to which his/her weight belongs.

The constant speed control unit may perform a PWM control for a voltage applied to the braking resistor.

The braking resistor may be configured by connecting a plurality of resistance elements in parallel or in series.

The braking resistor may also be configured as a variable resistor.

The braking resistor may also be configured by a plurality of LEDs or motors.

A brake function may be provided by shorting both ends of the power input terminal of the DC motor.

A start switch is installed in the casing to start the descent movement by switching from a first state in which the DC motor is shorted to a second state in which both ends of the power input terminal of the DC motor are connected to the braking resistor.

The start switch may be an on/off button, a lever or a string with a safety pin.

The casing is fixed to one side of a building, and the safety belt is connected to an end of the wire unwound from the drum.

A partial length of the wire or an entire length of the wire is covered with a non-combustible coating or a protective tube.

At least two drums are arranged in series or parallel in the casing, and when in use, at least two wires are unwound to the outside of the casing for the descent.

The safety belt may have a ring shape that can be inserted into an armpit of the user, and two safety belts are attached to the casing so that two users can use it together.

The wires unwound from the two or more drums can be connected to one biner(carabiner).

Additionally, the portable emergency escape device may further include a guide member in the form of a roller or a ring fixed near each drum to constantly maintain a position where the wire is unwound.

An end of the wire may be connected to a biner(carabiner) that can be hung on a rod-shaped support fixed to a building or hung on the wire after the wire is wound around a building pillar.

### Advantageous Effects

The portable emergency escape device according to the present invention has the following effects.

First, when descending, a braking is performed using a braking resistance of a DC motor, and a descending speed is automatically controlled in response to a user's weight, so that the descending speed can be safely maintained at a constant speed regardless of the weight of the user.

Second, right before descending, weight is loaded on the wire fixed to the building so that the wire is taut, and a foot is placed on a railing of a building to stabilize the position, and then the wire is gently released with a simple button operation. Therefore, since an impact load is not applied to the wire, damage to the wire can be prevented and safety accidents can be prevented.

Third, since the wire is not unwounded even if the wire is pulled tight before the descent, the user can start the descent after sufficiently preparing an attitude or mind for the descent.

Fourth, in the event of a fire in a high-rise building, unlike an existing descending machine with which one person has to wait and escape one by one even in an urgent situation where a few seconds are important, multiple users can quickly escape individually using their own portable emergency escape devices.

Fifth, when two or more wires are simultaneously unwound from the casing, it is possible to prevent the user's body from rotating during a descent.

Sixth, since a big load can be supported by two or more wire, child and parent can descend simultaneously by hanging on each safety belt in case of emergency escape.

Seventh, when the emergency escape device is used for wartime drop operations, since the user's body does not rotate, balance can be maintained and heavy military equipment and combat equipment can be stably supported.

### DESCRIPTION OF DRAWINGS

FIG. 1 is a perspective view showing an appearance of a portable emergency escape device according to a preferred embodiment of the present invention.
FIG. 2 is a perspective view illustrating an internal configuration by removing a cover of the portable emergency escape device shown in FIG. 1.
Fig. 3 is a front view of Fig. 2.
FIG. 4 is a perspective view illustrating a modified example of a descent start switch shown in FIG. 1.
FIG. 5 is a perspective view showing an appearance of a portable emergency escape device with a safety handle according to an embodiment of the present invention.
FIG. 6 is a perspective view showing an example of a safety belt connected to a wire according to an embodiment of the present invention.
FIG. 7 and FIG. 8 are perspective views showing installation examples of portable emergency escape devices respectively.
Fig. 9 is a schematic wiring diagram showing a configuration of a DC motor for braking and stopping.
FIG. 10 is a perspective view showing an example of use of a portable emergency escape device according to a preferred embodiment of the present invention.
FIG. 11 is a perspective view showing an appearance of a portable emergency escape device according to another embodiment of the present invention.
FIG. 12 is a perspective view showing an internal structure by removing a cover shown in FIG. 11.
Fig. 13 is a front view of Fig. 12.
FIG. 14 is a partially enlarged front view illustrating an example in which a guide member in the form of a roller is added to FIG. 13.
FIG. 15 is a perspective view showing an appearance of a portable emergency escape device according to another embodiment of the present invention.
FIG. 16 is a perspective view showing an internal configuration by removing a cover shown in FIG. 15;
Fig. 17 is a schematic wiring diagram showing a configuration of a DC motor for braking and stopping.
FIG. 18 is a circuit diagram illustrating a configuration in which a constant speed control unit performs a PWM control.

### BEST MODE

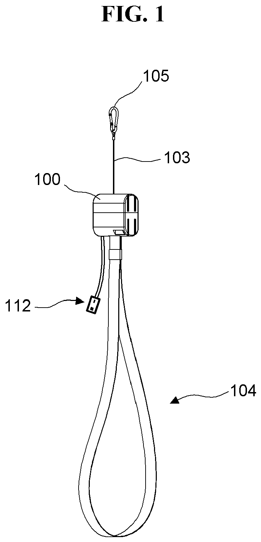

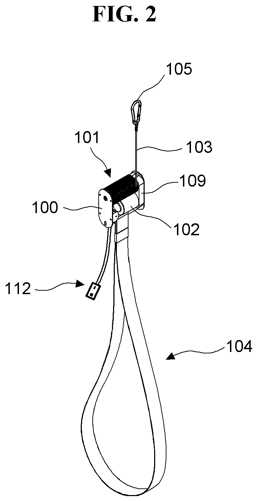

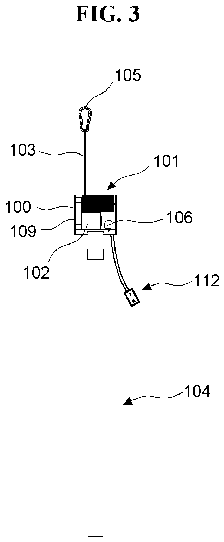

FIG. 1 is a perspective view showing an appearance of a portable emergency escape device according to a preferred embodiment of the present invention, FIG. 2 is a perspective view showing an internal configuration by removing a cover shown in FIG. 1, and FIG. 3 is a front view of FIG. 2.

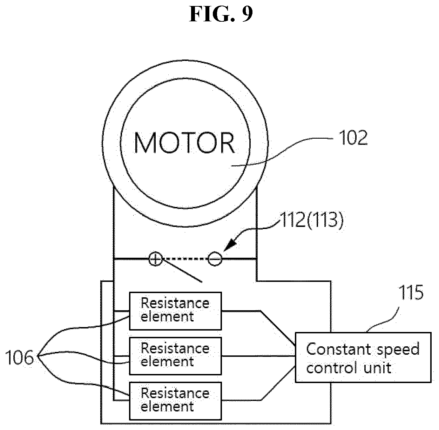

By referring to FIG. 1 to 3, the portable emergency escape device according to a preferred embodiment of the present invention has a casing 100 of a predetermined shape, a drum 101 rotatably installed inside the casing 100 and around which a wire 103 is wound, a reduction gear 109 connected to the drum 101 to reduce a rotational speed of the drum 101 in case of an emergency escape, a DC motor 102 having a rotation shaft connected to the reduction gear 109, a braking resistor 106 connected to the DC motor 102, a constant speed control unit (see 115 in FIG. 9) that maintains a constant descent speed regardless of a weight, a safety belt 104 connected to a lower end of the casing 100 and fixing escaper's upper body, and a hook 105 connected to an end of the wire 103 and hooked to a predetermined support structure fixed to a high-rise building.

The drum 101 is disposed in the casing 100 and rotates passively by a pulling force of the wire 103 by the descent of the escaper. Preferably, both ends of a rotating shaft of the drum 101 are supported in the casing 100 to prevent the user's load from leaning to one side of the reduction gear 109.

Strings of various materials, including a conventional rope-type wire, may be used as the wire 103. Additionally, a portion of the wire 103 or an entire of the wire 103 may be coated with a non-combustible coating or a protective tube to ensure flame resistance in case of fire. In addition, a light emitting member (not shown) such as an LED (Light Emitting Diode) or an EL (Electroluminescence) wire is installed on at least a portion of the wire 103 to secure visibility for identifying a descending state in case of fire, on a cloudy day, or at night.

The reduction gear 109 reduces the descending speed of the escaper at a predetermined gear ratio and transmits it to the rotation shaft. The reduction gear 109 may be composed of various known gear assemblies.

The DC motor 102 generates a braking force by the rotation shaft rotated by an external force. The DC motor 102 is not actively rotated by an external power source, but the rotation shaft along with the drum 101 is passively rotated by the pulling force of the wire 103 caused by the descent (free fall movement) of the escaper.

The braking resistor 106 is connected between both ends of the power input terminal of the DC motor 102 to determine the descending speed. In case of emergency escape, if the braking resistor 106 is controlled to have a resistance value corresponding to the escaper's weight, the descending speed can be maintained constant regardless of the weight of the escaper. In addition, a brake function can be provided by shorting both ends of the power input terminal of the DC motor 102 to directly contact each other. Here, both ends of the power input terminal are electrically connected to a short switch 107, and when the short switch 107 is turned on, the DC motor 102 is shorted and acts as a brake. The short switch 107 is installed to be exposed to the outside of the casing 100.

The braking force generated by a power generation of the DC motor 102 is changed according to the resistance value of the braking resistor 106. That is, if the resistance value of the braking resistor 106 connected to the DC motor 102 is relatively large, an energy consumed as Joule heat in the braking resistor 106 is large, so the braking force of the DC motor 102 is weak and the descending speed is faster, and when the resistance value is relatively small, an energy consumed as Joule heat is small and the braking force of the DC motor 102 is large, so the descending speed is slow. When the resistance value is 0, the descent is substantially stopped because the braking force is large due to a short circuit state.

For example, when the resistance value of the braking resistor 106 is relatively small, such as 100 ohms (Q), the braking force generated by the DC motor 102 is large, so that the drum 101 connected to the rotation shaft of the DC motor 102 slowly rotates, and the speed at which the wire 103 is unwound by the rotation is slow, so the descending is performed slowly. Conversely, when the resistance value of the braking resistor 106 is controlled to gradually increase, such as 200Ω, 300Ω, or 400Ω etc., the braking force generated by the DC motor 102 gradually weakens and the descending speed gradually increases. As described above, the resistance value of the braking resistor 106 determines the descending speed, so the resistance value corresponding to the weight of the user is controlled so that the user (escaper) can feel safe.

As shown in FIG. 9, start switches 112 and 113 are connected to both ends of the power input terminal of the DC motor 102 to selectively operate the brake (short state). The braking resistor 106 and a constant speed control unit 115 are connected to both ends of the power input terminal in parallel with the start switches 112 and 113. The braking resistor 106 comprises a plurality of resistance elements having different resistance values. The plurality of resistance elements are connected in parallel or in series to control the descending speed, and the constant speed control unit 115 changes the resistance value to keep the descending speed constant.

Alternatively, the braking resistor 106 may be composed of a conventional rotary or sliding variable resistor (volume). In this case, it is possible to increase or decrease the descending speed by moving the lever of the variable resistor. At this time, a predetermined spring may be coupled to the lever of the variable resistor to provide an elastic restoring force. The function of controlling the variable resistor to increase or decrease the descending speed as needed can be usefully used for military training or wartime dropping operations.

Alternatively, the braking resistor 106 may be composed of a plurality of LEDs or motors. In addition, the braking resistor 106 may be composed of various electrical/electronic components (or devices) capable of controlling a total resistance value.

The constant speed control unit 115 changes the resistance value of the braking resistor 106 by physical movement or transformation of at least some parts in response to the user's weight. Preferably, the constant speed control unit 115 changes the resistance value of the braking resistor 106 by differently detecting a mechanical deformation of an axis of the drum 101 or a predetermined guide roll (not shown) being in contact with the wire 103 in response to the weight of the user through a spring or plate-shaped spring (not shown) disposed on one side of the inside of the casing 100. Specifically, when the user's weight is, for example, 100 kg, the axis of the drum 101 or the axis of the guide roll is mechanically deformed by a first displacement in response to the user's weight, which causes the spring to move or be deformed by a first length to set the resistance value of the braking resistor 106, for example, 100Ω automatically. Accordingly, since a relatively large braking force is generated by the DC motor 102, the user descends as the wire 103 is gradually released. On the other hand, when the user's weight is, for example, 50 kg, the axis of the drum 101 or the axis of the guide roll is mechanically deformed by a second displacement in response to the user's weight, which causes the spring to move or be deformed by a second length to set the resistance value of the braking resistor 106, for example, 400Ω automatically. Accordingly, since a relatively small braking force is generated by the DC motor 102, the user descends as the wire 103 is rapidly released compared to the case of the 100kg. In this way, since the constant speed control unit 115 controls the braking force to be generated differently in response to the user's weight, everyone descends at a constant speed regardless of the user's weight. If there is no speed control function of the constant speed control unit 115, the user having a weight of 100 kg descends significantly faster than the user having a weight of 50 kg, while applying a significantly larger rotational force (torque) to the rotation shaft of the DC motor 102.

Alternatively, the constant speed control unit 115 can changes the value of the braking resistor 106 by differently checking at least one of a voltage and a current of electricity generated between both ends of the power input terminal of the DC motor 102 in response to the user's weight during the descent. To this end, the constant speed control unit 115 may include a conventional current sensor or a voltage sensor. For example, if the user is an adult who is heavier than a child, and accordingly, electricity of relatively high power is generated between both ends of the power input terminal of the DC motor 102, which causes the control unit 115 to change the resistance value of the braking resistor 106 by differently sensing the amount of a power generation of the DC motor 102 in response to the weight of the user by checking at least one of the voltage and current of the generated electricity. The process of changing the resistance value of the braking resistor 106 to keep the descending speed constant regardless of the weight of the user is the same as the process described above.

Alternatively, the constant speed control unit 115 may change the resistance value of the braking resistor by differently checking the rotation amount of one selected from the DC motor, drum, reduction gear, and guide roll in response to the weight of the user during the descent. The process of changing the resistance value of the braking resistor 106 to keep the descending speed constant regardless of the weight of the user is the same as the process described above.

Alternatively, the constant speed control unit 115 may include a DIP switch for selecting a range that allows the user to select a range to which the user's body weight belongs. In this case, the DIP switch for selecting the range may be classified into, for example, 'adult' and 'child', and may be classified according to a predetermined weight range as '10 to 30 kg', '31 to 60 kg', '61 to 90 kg', and '91 to 120 kg'. The process of changing the resistance value of the braking resistor 106 to keep the descending speed constant regardless of the weight of the user is the same as the process described above.

More preferably, the constant speed control unit 115 performs PWM (Pulse Width Modulation) control using a predetermined switching element 115d connected to the braking resistor 106 to keep the descending speed constant regardless of the weight of the user. When a PWM control is performed, substantially the same effect as changing the resistance value of the braking resistor 106 can be obtained by changing a duty ratio of the pulse width to a voltage applied to the braking resistor 106 in response to the weight of the user. The pulse control is not limited to the PWM method, and may be performed by using various known pulse modulation methods or electrical signal control methods. Hereinafter, a configuration of the constant speed control unit 115 will be described in detail, based on an example of performing pulse control using a PWM method.

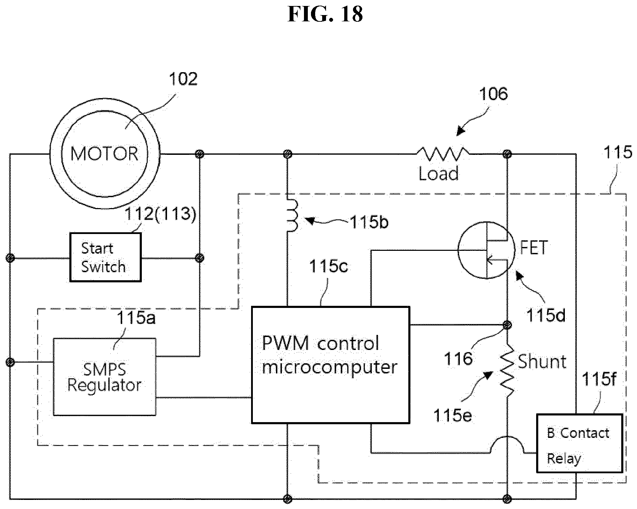

Specifically, as shown in FIG. 18, the constant speed control unit 115 includes an SMPS regulator 115a, a voltage detector 115b, a PWM control microcomputer 115c, a switching element 115d, a shunt resistor 115e, and a B contact relay 115f.

The SMPS regulator 115a outputs a constant voltage for driving the PWM control microcomputer 115c and the B contact relay 115f by a switching control of an electromotive force generated by the DC motor 102.

The voltage detector 115b detects a voltage of the electromotive force generated by the DC motor 102 and transmits it to the PWM control microcomputer 115c.

The PWM control microcomputer 115c detects a weight of the user by the voltage value detected by the voltage detector 115b and performs the PWM control based on this to change the resistance value of the braking resistor 106 substantially connected to both ends of the DC motor 102. At this time, the PWM control microcomputer 115c controls a duty ratio of the pulse width by driving the switching element 115d such as a Field Effect Transistor (FET) connected to the braking resistor 106. Here, the FET can be replaced with various known semiconductor switching elements.

The B contact relay 115f connects the braking resistor 106 to both ends of the DC motor 102 to acts as a safety device to prevent a fall accident due to a brake inability even when at least one of the SMPS regulator 115a, the PWM control microcomputer 115c, and the switching element 115d fails. That is, the B contact relay 115f has a switch structure (Normally Closed) that is normally turned on (when there is no control signal input) and turned off when a control signal is input, therefore even when at least one of the SMPS regulator 115a, PWM control microcomputer 115c, and the FET fails, it is switched to an on state to connect the braking resistor 106 to both ends of the DC motor 102.

During a normal operation of PWM control, the PWM control microcomputer 115c inputs a control signal to the B contact relay 115f so that the contacts of the B contact relay 115f are turned off. In addition, the PWM control microcomputer 115c is connected (see 116 in FIG. 18) between a source terminal of the FET and the shunt resistor 115e to measure a current flowing through the switching element 115d. The source terminal of the FET is the switching element 115d. The PWM control microcomputer 115c detects a failure of the switching element 115d by measuring a current value. Since normal PWM control is impossible if the current does not flow or is in a short state, the PWM control microcomputer 115c switches the B contact relay 115f to the on state in which the contacts are attached to each other to connect the braking resistor 106 to both ends of the DC motor 102. To this end, the B contact relay 115f is connected in parallel to the switching element 115d and the shunt resistor 115e and connected in series to the braking resistor 106.

The start switches 112 and 113 turn a first state to a second state by a switching action to start a descent action. In the first state, between both ends of the power input terminal of the DC motor 102 is a short state. And in the second state, both ends of the power input terminal of the DC motor 102 are connected to the braking resistor 106. The user can also stop at a desired point by operating the start switches 112 and 113 if necessary during the descent.

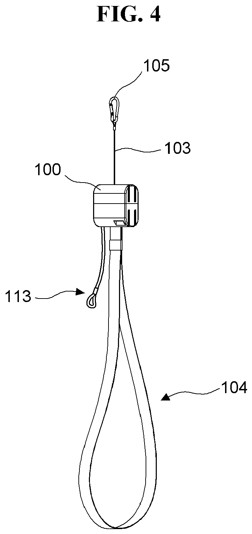

The start switches 112 and 113 are configured in the form of a button for which a cable of a predetermined length is extended to the inside of the casing 100. Alternatively, the start switches 112 and 113 may be configured in the form of a string, and an end of the string is connected to a predetermined safety pin (not shown) inserted into the casing 100 as shown in FIG. 4. At this time, the safety pin may be configured to interlock with the short switch 107. Alternatively, the start switches 112 and 113 may also be configured in the form of a lever, a dial, or an on/off button installed on the outer surface of the casing 100 without an extension electric cable.

The safety belt 104 has a ring shape into which a user's arm can be inserted. The safety belt 104 is preferably worn on both armpits of the user.

The safety belts 104 can be connected or disconnected to each other at a front chest by a predetermined fastener after it is worn on both armpits of the user.

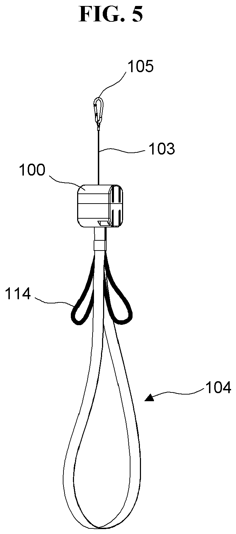

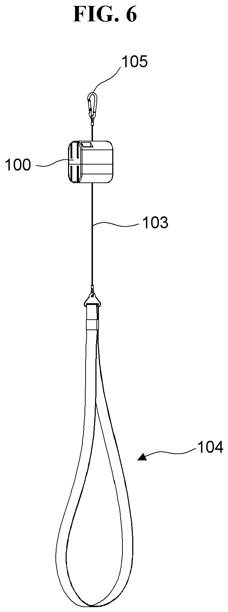

A ring-shaped safety handle may be attached to one side of the safety belt 104 as shown in FIG. 5 so that the user can hold and hang it by hand during use. In addition, when the casing 100 is fixed to one side of a building during use, as shown in FIG. 6, the safety belt 104 can be connected to an end (lower end) of the wire 103 unwound from the drum 101.

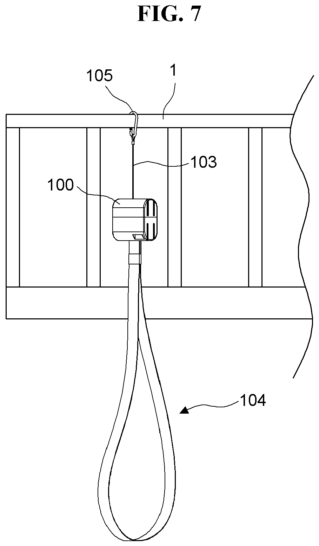

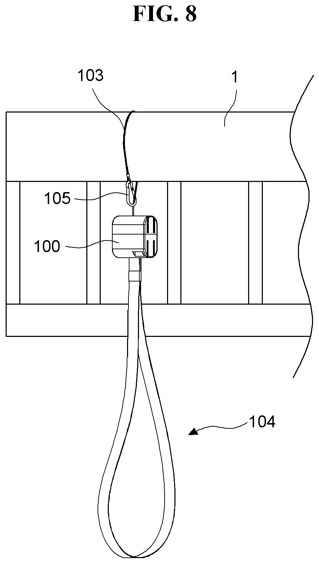

In case of emergency escape, a biner(carabiner)-shaped hook 105 connected to the end of the wire 103 is hooked and fixed to a pillar, and the safety belt 104 is hooked to the user's upper body, that is, the armpit. Specifically, as shown in FIG. 7, the biner-shaped hook 105 is hung on a rod-shaped support 1 installed on a veranda or terrace of a building, or as shown in FIG. 8, the biner-shaped hook 105 may be bound by hanging on the wire 103 after the wire 103 wound the pillar or the rod-shaped support 1 of the building.

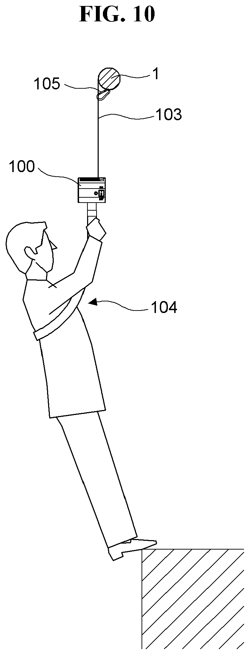

In the event of an emergency such as a fire in a high-rise building, as shown in FIG. 10, the user (escaper) hooks and binds the biner-shaped hook 105 connected to the end of the wire 103 to the rod-shaped support 1 installed on the pillar, veranda, or terrace of the building and then the user places his weight on the wire fixed to the building so that the wire is taut, and set his/her feet on the railing of the building to get into a position for the descent.

Then, preferably, when the start switches 112 and 113 are operated by pressing a button or pulling a string, the first state in which both ends of the power input terminal of the DC motor 102 are shorted to each other is converted into the second state in which both ends of the power input terminal of the DC motor 102 are connected to the braking resistor 106. Accordingly, the braking force generated by the DC motor 102 is weakened, so that the wire can be smoothly released while descending. Therefore, since an impact load is not applied to the wire, safety accidents such as wire breakage can be prevented.

The descending speed can be maintained constant regardless of the weight of the user by the constant speed control unit 115. The constant speed control unit 115 changes the resistance value of the braking resistor 106 by at least some parts being moved physically or being transformed in response to the user's weight, or by differently checking the amount of power generation generated between both ends of the power input terminal of the DC motor 102 when descending in response to the user's weight, or by following a weight range setting value of the dip switch set by the user, or by performing the PWM control. For example, when used by an adult with a relatively heavy weight, the resistance value of the braking resistor 106 is lowered to an appropriate value to reduce the descending speed, and when used by a child with a relatively light weight, the resistance value of the braking resistor 106 is increased to an appropriate value to increase the descent speed, so that the descent speed can always be maintained constant regardless of the weight.

When the user almost reaches the ground and wants to stop at a desired position, by operating the start switches 112 and 113 to short both ends of the power input terminal of the DC motor 102, the rotation of the drum 101 is suppressed and the wire 103 cannot be unwound, and then the descent is stopped.

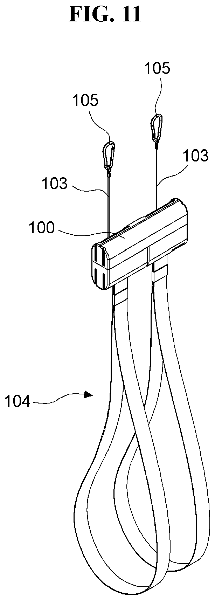

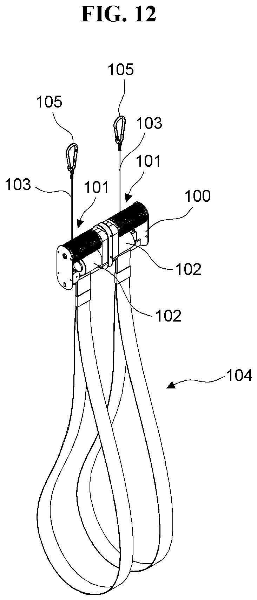

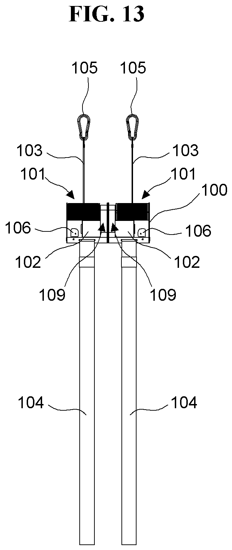

FIG. 11 is a perspective view showing an external appearance of a portable emergency escape device according to another embodiment of the present invention, FIG. 12 is a perspective view showing an internal configuration with the cover removed shown in FIG. 11, and FIG. 13 is a front view of FIG. 12.

By referring to FIG. 11 to 13, the portable emergency escape device according to a preferred embodiment of the present invention has a casing 100 of a predetermined shape, at least two drums 101 rotatably installed inside the casing 100 and around which wires 103 are wound, a reduction gear 109 connected to each drum 101 to reduce the rotational speed of the drum 101 in case of emergency escape, a DC motor 102 having a rotation shaft connected to each reduction gear 109, a braking resistor 106 connected to the DC motor 102, a hook 105 connected to the end of each wire 103 and hooked and fixed to a predetermined support structure fixed to a high-rise building, and a safety belt 104 connected to the lower end of the casing 100 and fixing the escaper's upper body.

At least two drums 101 are disposed in the casing 100 in series or parallel form. Hereinafter, the configuration of the invention will be described based on an embodiment in which two drums 101 are disposed in series in the casing 100. The drum 101 rotates passively by the pulling force of the wire 103 caused by the descent of the escaper. It is preferable that both ends of the rotating shaft of each drum 101 are supported in the casing 100 to prevent the user's load from leaning to one side of the reduction gear 109.

Strings of various materials, including a conventional rope-type wire, may be used as the wire 103. Additionally, a portion of the length of the wire 103 or the entire length of the wire 103 may be coated with a non-combustible coating or a protective tube to ensure flame resistance in case of fire. In addition, at least part of the wire 103 is installed with a light emitting member (not shown) such as an LED or an EL wire to secure visibility for identifying a descending state in case of fire, on a cloudy day, or at night.

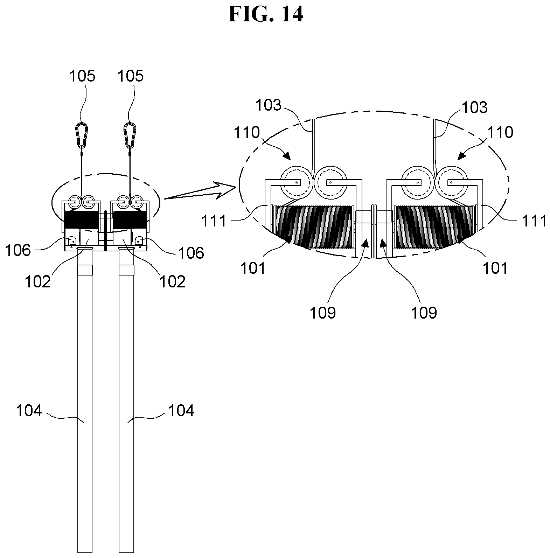

As shown in FIG. 14, a guide member 110 composed of a pair of rollers is fixed to the casing 100 near each drum 101 by a predetermined bracket 111 to constantly maintain a position where the wire 103 is released. Alternatively, the guide member 110 may be replaced with a single roller or a ring-shaped guide member 110 through which the wire 103 passes. According to this configuration, even if the positions of the wires 103 released from each of the two drums 101 are different, the effect of the wire being released at a constant position (preferably, the middle point) based on the longitudinal direction of the drum 101 is achieved, so that an imbalance can be prevented when the escaper hangs on.

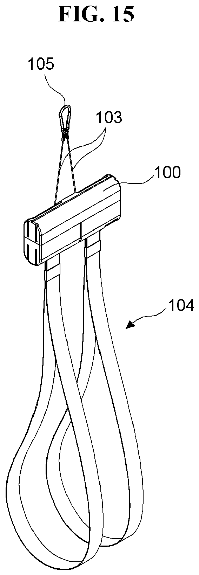

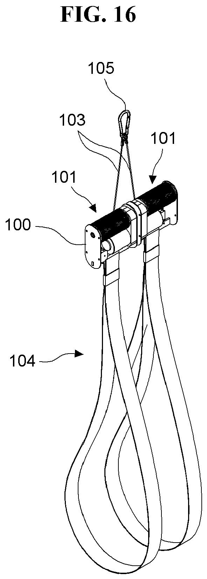

As shown in FIGS. 15 and 16, the wires 103 respectively unwound from the two drums 101 may be connected to one biner.

The reduction gear 109 reduces the descending speed of the escaper by a predetermined gear ratio and transmits it to the rotation shaft. The reduction gear 109 may be composed of various known gear assemblies.

The DC motor 102 generates a braking force by the rotation shaft rotated by an external force. The DC motor 102 is not actively rotated by an external power source, but passively rotated along with the drum 101 by a pulling force of the wire 103 generated by the escaper's descent (free fall movement).

At least one braking resistor 106 is connected between both ends of the power input terminal of the DC motor 102 to determine the descending speed. Therefore, in case of emergency escape, it is possible to descend at constant speed regardless of the weight of the escaper by the braking resistor 106, and the brake function can be performed by a direct contact of both ends of the power input terminal of the DC motor 102 to cause short. Here, both ends of the power input terminal are electrically connected to a switch 107, and when the switch 107 is turned on, the DC motor 102 is shorted and acts as a brake. The switch 107 is installed to be exposed to the outside of the casing 100.

The braking force generated by the power generation of the DC motor 102 is changed according to the resistance value of the braking resistor 106. That is, if the resistance value of the braking resistor 106 connected to the DC motor 102 is relatively large, the energy consumed as Joule heat in the braking resistor 106 is large, so the braking force of the DC motor 102 is weak, so the descending speed is faster, and when the resistance value is relatively small, the energy consumed as Joule heat is small and the braking force of the DC motor 102 is large, so the descending speed is slow. When the resistance value is 0, the descent is substantially stopped due to the large braking force because it is in a short circuit state.

For example, when a resistance value of the braking resistor 106 is relatively small, such as 100Ω, the braking force generated by the DC motor 102 is large, so that the drum 101 connected to the rotation shaft of the DC motor 102 rotates slowly and the wire 103 is released slowly, so the descent is slow. Conversely, when a resistance value of the braking resistor 106 is controlled to gradually increase, such as 200Q, 300Q, or 400Q, the braking force generated by the DC motor 102 gradually weakens and the descending speed gradually increases. As described above, since the resistance value of the braking resistor 106 determines the descending speed, it is preferable to set it to an appropriate resistance value so that escapers may feel safe.

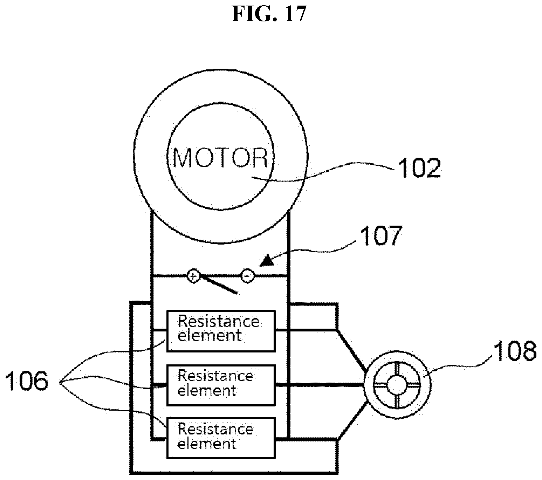

As shown in FIG. 17, the switch 107 for selectively operating a brake (short state) is connected to both ends of the power input terminal of the DC motor 102, and a speed control unit 108 may be connected between both ends of the terminal to adjust the descending speed by selecting a specific resistance in parallel with the switch 107 among a plurality of resistances included in the braking resistor 106. The speed control unit 108 may be configured in various forms such as a push button, a dial, or a rotary lever. Although not shown in FIG. 17, apart from the speed control unit 108, as in the above-described embodiment, a constant speed control unit 115 that maintains the descending speed constant regardless of the user's weight is connected to the braking resistor 106.

The safety belt 104 is made of a ring shape in order to be inserted into the user's armpit, and preferably two safety belts 104 are attached to the casing 100 so that two users can use them together. These safety belts 104 are worn in an X-shape or vertical shape on both armpits of the user.

The two safety belts 104 may be configured to match each other in shape and size so that the two safety belts 104 can be overlapped for use. In addition, it is also possible to connect or disconnect the safety belt 104 each other at a front chest of the user by a predetermined fastener when the safety belt 104 is inserted into the user's armpit.

In use, when the casing 100 is fixed to one side of a building, the safety belt 104 may be connected to an end of the wire 103 unwound from the drum 101. In addition, a ring-shaped safety handle may be attached to one side of the safety belt 104 so that the user can hold and hang it by hand during use.

In case of emergency escape, a biner-shaped hooks 105 connected to the ends of the two wires 103 are hooked and fixed to a pillar, and the safety belt 104 is hooked to an upper body, that is, the armpit of the user(escaper). Specifically, each biner is hung on a rod-shaped support installed on a terrace of the building or the like, or tied by hanging on the wire 103 after the wire 103 is wound around a building pillar or the rod-shaped support. When two safety belts 104 are attached to the casing 100, it is also possible for child and adult to descend together.

In the ready state as described above, when the user steps off the building and tries to escape, the two drums 101 slowly rotate by the braking force inversely proportional to the braking resistance value of the DC motor 102, and the two wires 103 are released, so the escaper can descend safely at the set descent speed.

When the user almost reaches the ground and wants to stop at a desired position, by operating the start switches 112 and 113 to short both ends of the power input terminals of the DC motor 102, the strong braking force is generated by each DC motor 102, and since the rotation of the drum 101 is suppressed and the wire 103 cannot be unwound, the descent is stopped.

Although the present invention has been described above with limited examples and drawings, the present invention is not limited thereto, and various modifications and variations are of course possible within the technical spirit of the present invention and the scope of the claims described below by those skilled in the art to which the present invention belongs.

### INDUSTRIAL APPLICABILITY

When the present invention is applied, in the event of a fire in a high-rise building, multiple users can individually and quickly escape using their own portable emergency escape devices. When descending, braking is performed using the braking resistance of the DC motor, and the descending speed is automatically controlled in response to the user's weight, so that the user can safely descend at a constant speed regardless of the weight.

## Claims

1. A portable emergency escape device comprising:
a casing;
a drum rotatably installed inside the casing and around which a wire is wound;
a reduction gear connected to the drum;
a DC motor having a rotation shaft connected to the reduction gear;
a safety belt worn by a user;
a braking resistor for determining a descent speed; and
a constant speed control unit connected to the braking resistor,
wherein the braking resistor is connected between both ends of a power input terminal of the DC motor, and the braking resistor can control a resistance value,
wherein the constant speed control unit changes the resistance value of the braking resistor in response to the user's weight to maintain the descent speed constant regardless of the user's weight.

2. The portable emergency escape device according to claim 1, wherein the constant speed control unit changes the resistance value of the braking resistor by physical movement or deformation of at least some parts in response to the weight of the user.

3. The portable emergency escape device according to claim 2, wherein the constant speed control unit changes the resistance value of the braking resistor by differently detecting a mechanical deformation of an axis of the drum or a guide roll being in contact with the wire in response to the weight of the user through a spring disposed on one side of an inside of the casing.

4. The portable emergency escape device according to claim 1, wherein, when descending, the constant speed control unit differently checks at least one of a voltage and a current generated between the power input terminals of the DC motor in response to the weight of the user to change the resistance value of the braking resistor.

5. The portable emergency escape device according to claim 1, wherein, when descending, the constant speed control unit differently checks a rotation amount of one selected from the DC motor, the drum, the reduction gear, and a guide roll in response to the weight of the user to change the resistance value of the braking resistor.

6. The portable emergency escape device according to claim 1, wherein the constant speed control unit comprises a DIP switch for selecting a range that allows the user to select a range to which his/her weight belongs.

7. The portable emergency escape device according to claim 1, wherein a switching element is connected to the braking resistor, and the constant speed control unit performs a pulse control using the switching element to change the resistance value between both ends of the power input terminal of the DC motor.

8. The portable emergency escape device according to claim 1, wherein the braking resistor is configured by connecting a plurality of resistance elements in parallel or series.

9. The portable emergency escape device according to claim 1, wherein the braking resistor is configured by a variable resistor to increase or decrease the descent speed.

10. The portable emergency escape device according to claim 1, wherein the braking resistor is configured by a plurality of LEDs or motors.

11. The portable emergency escape device according to claim 1, wherein a brake function is provided when both ends of the power input terminal of the DC motor are shorted.

12. The portable emergency escape device according to claim 11, wherein a start switch is installed in the casing to start the descent movement by switching from a first state in which the DC motor is shorted to a second state in which both ends of the power input terminal of the DC motor are connected to the braking resistor.

13. The portable emergency escape device according to claim 12, wherein the start switch is an on/off button, a lever or a string with a safety pin.

14. The portable emergency escape device according to claim 12, wherein the casing is fixed to one side of a building and the safety belt is connected to an end of the wire unwound from the drum.

15. The portable emergency escape device according to claim 12, wherein a partial length of the wire or an entire length of the wire is covered with a non-combustible coating or a protective tube.

16. The portable emergency escape device according to claim 11, wherein at least two drums are arranged in series or parallel in the casing, and when in use, at least two wires are unwound to the outside of the casing for the descent.

17. The portable emergency escape device according to claim 16, wherein the safety belt is made of a ring shape that can be inserted into an armpit of the user, and two safety belts are attached to the casing so that two users can use it together.

18. The portable emergency escape device according to claim 17, wherein the wires unwound from the two or more drums are connected to one biner.

19. The portable emergency escape device according to claim 17, wherein the portable emergency escape device further comprises a guide member in a form of a roller or a ring fixed near each drum to maintain a constant position to which the wire is unwound.

20. The portable emergency escape device according to claim 1, wherein an end of the wire is connected to a biner that can be hung on a rod-shaped support fixed to a building or hung on the wire after the wire is wound around a building pillar.
